# EUROPEAN PATENT APPLICATION

(11) **EP 3 043 295 A2**
(43) Date of publication of application: **13.07.2016**
(21) Application number: 15020125.9
(22) Date of filing: 24.07.2015
(51) Int. Cl.: G06N 5/02, G06Q 30/00

(54) **INTELLIGENT BUSINESS SUPPORT SYSTEM**

(30) Priority: 06.01.2015 PL 41088815
(71) Applicant: Esecure Sp. z o.o., Krosno 38-400 (PL)
(72) Inventor: ZABAWA, Dawid, Krosno 38-400 (PL)

(57) **Abstract**

An intelligent business support system to support business decision-making in a company, characterised in that it has an expert module (1) to generate answers to system user queries through an inference mechanism (2) and a search and analysis application (3) based on the data contained in the system's knowledge base (4) that is editable with a knowledge base editor (5), to be generated from a data warehouse (6) populated with an integration application (7) and data sources (8) using an executable program (9) where answers to user queries are stored in a dynamic database (10) and communication between the user and the knowledge base editor (5) and the executable program (9) is accomplished via a user interface (11).

## Description

The subject matter of the invention is an intelligent business support system to support corporate management.

An intelligent business support system in which reports are analysed is known from patent specification US8688606 B2. In this system, a change detection module predicts the results of future reports based on historical reports and identifies the first report that deviates from the predicted results. This system does not contain, however, an expert system to support business decision-making. A combined intelligent business support and e-learning system is known from patent specification US 8761659 B1, which is, however, oriented to education, but not to support of future business decision-making to ensure optimal corporate management. An intelligent business support system is known from patent specification US 20140214495 A1, which is, however, oriented to software protection and user communication methods, but not to the very process of supporting business decision-making. Various intelligent business support systems are known from the current state of the art, but they do not contain an expert module to support business decision-making that could explain user problems related to management, as known business support systems are based on conventional software in which the user has to define what action should be executed by the software and how this should be done. Furthermore, systems that are available on the market lack a knowledge base typical of expert systems. The solution of the invention is free of such defects.

The solution of the invention is meant to provide an intelligent business support system to support business decision-making in companies, characterised in that it has an expert module to generate answers to system user queries through an inference mechanism and a search and analysis application based on the data contained in the system's knowledge base that is editable with a knowledge base editor, to be generated from a data warehouse populated with an integration application and data sources using an executable program where answers to user queries are stored in a dynamic database and communication between the user and the knowledge base editor and the executable program is accomplished via a user interface. The system of the invention can have a state transition functionality (12) to design, update and change the type of entities and to manage the states of system entities by editing state diagrams and a functionality to define the states of system entities (14), which enables to add, remove, edit and sort the states of system entities. The system of the invention can have financial analysis files to generate financial reports, sales analysis files to generate sales reports, cost analysis files to generate cost reports, cash management analysis files to generate short-term cash management reports on cash surpluses and shortages and planning and budgeting analysis files to generate planning and budgeting, profit optimisation and financial performance simulation reports. The crucial component of the system of the invention is an expert module that includes a functionality to define and edit the area of inference by specifying the name of an area, providing a description of a new area, selecting a warehouse data cube and determining advanced inference capabilities. The expert module has a functionality to define the rule of inference and a functionality to enable inference after specifying an inference target, an inference variable and inference area values and parameters. In the system of the invention, the integration application has a data exchange service functionality to start and enable or disable the service and view the status of defined services, and the integration application has a data source selection functionality to add or remove data sources. The integration application has also a system configuration functionality to specify the parameters necessary to set up communication with an external financial and accounting system and a data range configuration functionality to specify, for a data source, data inputs, the synchronisation time thereof and report names. The integration application in the system of the invention has also a data linking functionality to define data links imported from external financial and accounting systems. In the system of the invention, the search and analysis application has a data source editor to perform the analytical function and a report editor to search and present data, and the database has a functionality to edit, add and remove database values. In the system of the invention, the inference mechanism presents inference results forwards and backwards for all inference areas and contains an inference creator to create new inference areas, including inference rules and targets.

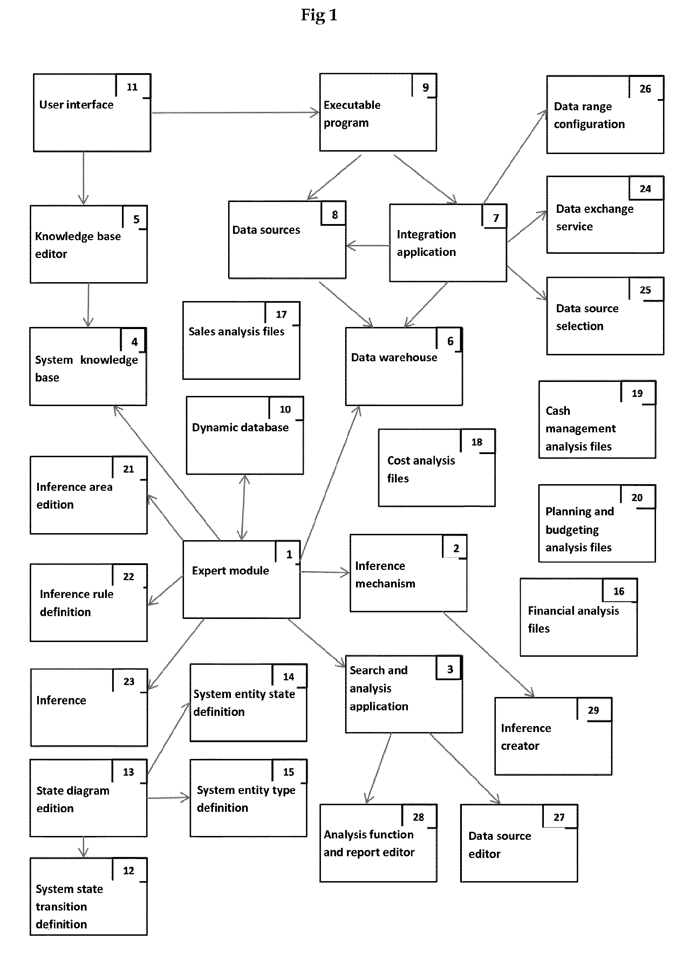

The subject matter of the invention is presented in the drawing, where fig 1 shows a diagram of the system.

An intelligent business support system to support business decision-making in a company, consisting of an expert module (1) to generate answers to system user queries regarding sales forecasts through an inference mechanism (2) after the user specifies an area of inference (21) by specifying the name of the area, providing a description of a new area, selecting a warehouse data cube (6) in the form of a sales data table and determining advanced inference capabilities, and then defining the rule of inference (22) by entering a gross sales value, a sales volume and the text of the inference rule to determine return on sales. Next, the expert module (1), through an inference enabling functionality (23) after specifying an inference target, an inference variable and inference area values and parameters, returns an inference result by indicating whether or not a given sales volume can be deemed as high or low sales.

## Claims

1. An intelligent business support system to support business decision-making in a company, **characterised in that** it has an expert module (1) to generate answers to system user queries through an inference mechanism (2) and a search and analysis application (3) based on the data contained in the system's knowledge base (4) that is editable with a knowledge base editor (5), to be generated from a data warehouse (6) populated with an integration application (7) and data sources (8) using an executable program (9) where answers to user queries are stored in a dynamic database (10) and communication between the user and the knowledge base editor (5) and the executable program (9) is accomplished via a user interface (11).

2. An intelligent business support system according to claim 1, **characterised in that** it has a state transition functionality (12) to design, update and change the type of entities and to manage the states of system entities by editing state diagrams (13).

3. An intelligent business support system according to claim 2, **characterised in that** it has a functionality to define the states of system entities (14), which enables to add, remove, edit and sort the states of system entities.

4. An intelligent business support system according to claims 2 and 3, **characterised in that** it has a functionality to define the types of system entities (15), which enables to add, remove, edit and sort the types of system entities.

5. An intelligent business support system according to claim 1, **characterised in that** it contains financial data files (16) to generate financial reports.

6. An intelligent business support system according to claim 1, **characterised in that** it contains sales analysis files (17) to generate sales reports.

7. An intelligent business support system according to claim 1, **characterised in that** it contains cost analysis files (18) to generate cost reports.

8. An intelligent business support system according to claim 1, **characterised in that** it contains cash management analysis files (19) to generate short-term cash management reports on cash surpluses and shortages.

9. An intelligent business support system according to claim 1, **characterised in that** it contains planning and budgeting analysis files (20) to generate planning and budgeting, profit optimisation and financial performance simulation reports.

10. An intelligent business support system according to claim 1, **characterised in that** the expert module (1) includes a functionality to define and edit the area of inference (21) by specifying the name of an area, providing a description of a new area, selecting a warehouse data cube (6) and determining advanced inference capabilities.

11. An intelligent business support system according to claim 1, **characterised in that** the expert module (1) contains a functionality to define the rule of inference (22).

12. An intelligent business support system according to claim 1, **characterised in that** the expert module (1) contains a functionality to enable inference (23) after specifying an inference target, an inference variable and inference area values and parameters.

13. An intelligent business support system according to claim 1, **characterised in that** the integration application (7) has a data exchange service functionality (24) to start and enable or disable the service and view the status of defined services.

14. An intelligent business support system according to claim 13, **characterised in that** the integration application (7) has a data source selection functionality (25) to add or remove data sources (8).

15. An intelligent business support system according to claims 1, 13 and 14, **characterised in that** the integration application (7) has a system configuration functionality (25) to specify the parameters necessary to set up communication with an external financial and accounting system.

16. An intelligent business support system according to claims 1, 13, 14 and 15, **characterised in that** the integration application (7) has a data range configuration functionality (26) to specify, for a data source (8), data inputs, the synchronisation time thereof and report names.

17. An intelligent business support system according to claim 1, **characterised in that** the integration application (7) has a data linking functionality (8) to define data links imported from external financial and accounting systems.

18. An intelligent business support system according to claim 1, **characterised in that** the search and analysis application (3) has a data source editor (27) to perform the analytical function and a report editor (28) to search and present data.

19. An intelligent business support system according to claim 1, **characterised in that** the database (10) has a functionality to edit, add and remove database values.

20. An intelligent business support system according to claim 1, **characterised in that** the inference mechanism (2) presents inference results forwards and backwards for all inference areas.

21. An intelligent business support system according to claim 1, **characterised in that** the inference mechanism (2) contains an inference creator (29) to create new inference areas, including inference rules and targets.
